## Europäisches Patentamt
## European Patent Office
## Office européen des brevets

(11) Veröffentlichungsnummer: **0 252 872**
**A2**

# (12) EUROPÄISCHE PATENTANMELDUNG

(21) Anmeldenummer: 87730072.3

(22) Anmeldetag: 02.07.87

(51) Int. Cl.⁴: **H 04 M 3/22**
H 04 M 3/18, H 04 M 3/00

(30) Priorität: 09.07.86 DE 3623502

(43) Veröffentlichungstag der Anmeldung:
13.01.88 Patentblatt 88/02

(84) Benannte Vertragsstaaten: **AT BE DE IT NL**

(71) Anmelder: **Siemens Aktiengesellschaft Berlin und München**
**Wittelsbacherplatz 2**
**D-8000 München 2 (DE)**

(72) Erfinder: **Schade, Gerd, Dipl.-Ing.**
**Am Dorfanger 13**
**D-1000 Berlin 26 (DE)**

**Schley, Michael, Dipl.-Ing.**
**Kreuznacher Strasse 65**
**D-1000 Berlin 33 (DE)**

**Schüler, Ulrich, Dipl.-Ing.**
**Rhinstrasse 23**
**D-1000 Berlin 49 (DE)**

(54) **Schaltungsanordnung zur Auswertung von Teilnehmerschleifenzuständen (Konstantstromeinspeisung).**

(57) Die Erfindung betrifft eine Schaltungsanordnung zur Auswertung von Teilnehmerschleifenzuständen in Fernsprechanlagen, insbesondere in Fernsprechnebenstellenanlagen, mit beim Verbindungsaufbau zwischen Teilnehmerstellen derselben Anlage bzw. zwischen einer Teilnehmerstelle der Anlage und einer Teilnehmerstelle einer zweiten Anlage über eine entsprechende Verbindungsleitung unter Verwendung von an je einer Sprechader mit unterschiedlichem Potential angeschalteten Auswertemitteln, wobei in Reihe mit jedem dieser Auswertemittel eine die Funktion einer Drosselspule mit hohem Scheinwiderstand, mit geringer Einfügungsdämpfung und mit hoher Unsymmetriedämpfung bildende Anordnung, bestehend aus einem elektronischen Schalter, angeordnet ist.

Im Schaltstromkreis des jeweiligen elektronischen Schalters (TA, TB) ist ein in Hybridtechnik ausgeführter Speisestromwiderstand (RA, RB) vorgesehen, wobei einer der beiden Speisestromwiderstände (RA, RB) durch Läserabgleich an die Leitungsverhältnisse angepaßt werden kann. Die Speisestromwiderstände (RA, RB) sind derart dimensioniert, daß der Speisestrom der A-Ader (IA) gleich dem Speisestrom der B-Ader (-IB) ist.

Derartige Schaltungsanordnungen sind in Teilnehmeranschlußbaugruppen in Fernsprechanlagen, insbesondere in Fernsprechnebenstellenanlagen, eingesetzt.

## Beschreibung

Schaltungsanordnung zur Auswertung von Teilnehmerschleifenzuständen (Konstantstromeinspeisung)

Die Erfindung bezieht sich auf eine Schaltungsanordnung zur Auswertung von Teilnehmerschleifenzuständen in Fernsprechanlagen, insbesondere in Fernsprechnebenstellenanlagen, mit beim Verbindungsaufbau zwischen Teilnehmerstellen derselben Anlage bzw. zwischen einer Teilnehmerstelle der Anlage und einer Teilnehmerstelle einer zweiten Anlage über eine entsprechende Verbindungsleitung unter Verwendung von an je einer Sprechader mit unterschiedlichem Potential angeschalteten Auswertemitteln, wobei in Reihe mit jedem dieser Auswertemittel eine die Funktionen einer Drosselspule mit hohem Scheinwiderstand, mit geringer Einfügungsdämpfung und mit hoher Unsymmetriedämpfung bildende Anordnung, bestehend aus einem elektronischen Schalter, angeordnet ist.

Eine derartige Schaltungsanordnung ist aus der DE-PS 32 14 624 bekannt, bei der die herkömmlichen Drosselspulen zur Gleichstromeinspeisung der Teilnehmerstellen durch elektronische Schalter ersetzt sind. Da jedoch die Leitungsverhältnisse je nach Leitungslänge und Leitungsart sehr unterschiedlich sein können, ergeben sich dementsprechend sehr unterschiedliche Schleifenströme, die die Qualität der Nachrichtenübertragung nicht unerheblich vermindern können. Um die Schleifenströme trotzdem in gewissen Grenzen halten zu können, sind in den sogenannten Teilnehmerschaltungen mehrere Widerstände vogesehen, die sich durch unterschiedliche Schaltkombinationen in der Größenordnung so kombinieren lassen, daß eine Leitungsanpassung vorgenommen werden kann. Allerdings sind dieser Art von Leitungsanpassung allein schon durch die Toleranzen der Widerstandsbauelemente Grenzen gesetzt.

Die der Erfindung zugrunde liegende Aufgabe besteht darin, eine Schaltungsanordnung anzugeben, mit der die Leitungsanpassung, insbesondere unter Berücksichtigung der Toleranzunterschiede bei den Bauelementen, in einfacher Weise realisiert werden kann, wobei besonders die schaltungstechnischen Bedingungen, wie Störspannungsunabhängigkeit, hoher Scheinwiderstand mit geringer Einfügungsdämpfung im Sprachbereich, hohe Unsymmetriedämpfung etc., zu optimieren sind. Erfindungsgemäß wird dies durch die Kombinatien der Merkmale des Patentanspruchs 1 erreicht.

Durch den Einsatz der in Hybridtechnik ausgeführten Speisestromwiderstände in die jeweiligen Schaltstromkreise der Sprechadern ist erreicht, daß die Anzahl der sonst üblichen Widerstandsbauelemente und die damit verbundenen Toleranzungenauigkeiten auf ein Minimum reduziert sind und durch die an die jeweilige Leitung anzupassenden Widerstandsgrößen eine von der Leitungslänge und von der Leitungsart unabhängige optimale Anpassung erfolgen kann. Der Schleifenstrom kann somit für alle an der Fernsprechanlage angeschalteten Teilnehmerstellen leitungsunabhängig in gleicher Größe eingestellt werden, d. h. die Schaltungsanordnung stellt in ihrem Gleichstromverhalten eine nahezu konstante Stromquelle mit einem Speisestrom von 25 mA bei einer Versorgungsspannung von 48 V dar. Die Gleichstrombelastung für eine derartige Fernsprechanlage ist somit geringer als bei den sonst bekannten Schaltungsanordnungen, da der Schleifenstrom auf diesen Wert begrenzt ist.

Gemäß einer vorteilhaften Ausgestaltung der Erfindung ist vorgesehen, jeweils einen der beiden Speisestromwiderstände durch Läserabgleich einzustellen, wodurch in besonders einfacher Weise die Leitungsanpassung erfolgen kann.

Eine weitere vorteilhafte Ausgestaltung der Erfindung sieht vor, daß der Schaltstromkreis des das Minus-Potential durchschaltenden elektronischen Schalters mittels einer Strombegrenzungssteuerschaltung beeinflußt ist, so daß bei einem Erdschluß auf der A-Ader der Schleifenstrom auf annähernd 12 mA begrenzt ist und auch in diesem Fall die Gesamtverlustleistung der Schaltungsanordnung konstant bleibt. Damit ist sichergestellt, daß auch im Falle von Erdschlüssen keine durch die sonst üblichen Stromerhöhungen bedingten Mehrbelastungen der Bauelemente (Kontakte, Transistoren) eintreten.

Eine weitere vorteilhafte Ausgestaltung der Erfindung sieht vor, zwischen der Sprechader und dem jeweiligen elektronischen Schalter einen Vorwiderstand vorzusehen, die Ausgänge der Vorwiderstände mit den Wechselstromanschlüssen einer Graetz-Gleichrichterschaltung in Verbindung zu bringen und deren gepolte Anschlüsse mit dem Potential in Sperrichtung zu verbinden und außerdem den erdgepolten Auschluß und die Wechselstromanschlüsse der Graetz-Gleichrichterschaltung über Koppelkondensatoren miteinander zu verbinden. Die Vorwiderstände in Verbindung mit der Graetz-Gleichrichterschaltung haben die Aufgabe, die Schaltungsanordnung beispielsweise vor Stoßspannungen durch atmosphärische Beeinflussungen zu schützen. Die Überströme werden somit abgeleitet und die Spannung an den elektronischen Schaltern im zulässigen Bereich gehalten. Auch durch Feldstärken von Funksendern können schmalbandige HF-Signale eingekoppelt werden. Um die Demodulation dieser insbesondere amplitudenmodulierten HF-Signale an den Dioden der Graetz-Gleichrichterschaltung zu verhindern, sind die Koppelkondensatoren vorgesehen. Diese sorgen für eine starke Verminderung der HF-Störspannungen an den Dioden.

Die erfindungsgemäße Schaltungsanordnung ist in einem figürlich dargestellten Ausführungsbeispiel erläutert, indem lediglich die zum Verständnis notwendigen Bauelemente näher bezeichnet sind.

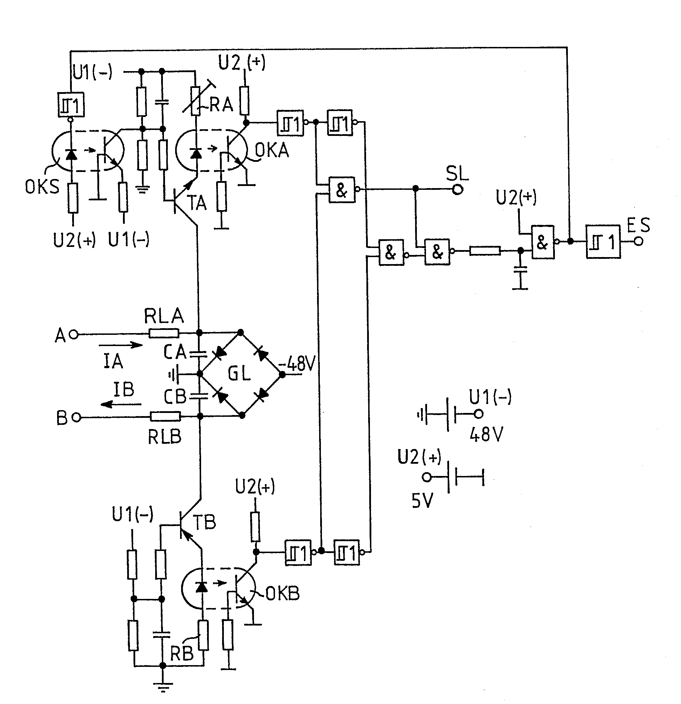

In der Figur sind die Sprechadern mit A und B bezeichnet, in denen über die nicht dargestellte Teilnehmerschaltung der Schleifenstrom $IA = -IB$ fließt. Außerdem sind die elektronischen Schalter TA und TB, die jeweils an den gleichnamigen A-, B-Adern liegen, dargestellt, in deren Schaltstromkreis jeweils ein Auswertemittel (Optokoppler) OKA bzw. OKB geschaltet sind. In dem Schaltstromkreis des jeweiligen elektronischen Schalters TA, TB ist außerdem jeweils ein in Hybridtechnik ausgeführter Speisestromwiderstand RA, RB vorgesehen. Weiterhin ist angedeutet, daß der Speisestromwiderstand in der A-Ader regelbar ist, so daß der Schleifenstrom IA = -IB auf einen festen Wert eingestellt werden kann. Außerdem ist erkennbar, daß die Vorwiderstände RLA und RLB mit der Graetz-Gleichrichterschaltung GL über die Wechselstromanschlüssen verbunden sind, während die gepolten Anschlüsse der Graetz-Gleichrichterschaltung GL am Potential in Sperrichtung liegen. Die A-Ader und die B-Ader sind über die Koppelkondensatoren CA, CB mit dem geerdeten Spannungsanschluß der Graetz-Gleichrichterschaltung GL verbunden.

Durch die nicht näher bezeichneten Schwellwertschalter und Und-Verknüpfungsgliedern ist angedeutet, daß die von den nicht dargestellten Teilnehmerschaltungen erzeugten unterschiedlichen Schleifenzustände durch den Schaltzustand Schleifenschluß SL und Erdschluß ES angezeigt werden können. Mit der Strombegrenzungssteuerschaltung OKS ist angedeutet, daß für den Fall eines Erdschlusses auf der A-Ader der Schleifenstrom IA annähernd konstant gehalten werden kann, so daß eine Überlastung der Bauteile, wie Transistoren und Impulsschaltkontakte, nicht erfolgen kann.

**Patentansprüche**

1. Schaltungsanordnung zur Auswertung von Teilnehmerschleifenzuständen in Fernsprechanlagen, insbesondere in Fernsprechnebenstellenanlagen, mit beim Verbindungsaufbau zwischen Teilnehmerstellen derselben Anlage bzw. zwischen einer Teilnehmerstelle der Anlage und einer Teilnehmerstelle einer zweiten Anlage über eine entsprechende Verbindungsleitung unter Verwendung von an je einer Sprechader mit unterschiedlichem Potential angeschalteten Auswertemitteln, wobei in Reihe mit jedem dieser Auswertemittel eine die Funktion einer Drosselspule mit hohem Scheinwiderstand, mit geringer Einfügungdämpfung und mit hoher Unsymmetriedämpfung bildende Anordnung, bestehend aus einem elektronischen Schalter, angeordnet ist, **gekennzeichnet durch** die Kombination der Merkmale

1.1 im Schaltstromkreis des jeweiligen elektronischen Schalters (TA, TB) ist ein in Hybridtechnik ausgeführter Speisestromwiderstand (RA, RB) vorgesehen,

1.2 der jeweilige Speisestromwiderstand (RA, RB) ist derart dimensioniert, daß der Speisestrom der A-Ader (IA) gleich dem Speisestrom der B-Ader (-IB) entspricht,

1.3 der Speisestrom (IA, -IB) liegt bei einer Versorgungsspannung von 48 V in der Größenordnung von 25 mA

2. Schaltungsanordnung nach Anspruch 1, **gekennzeichnet durch** das Merkmal

2.1 jeweils ein Speisestromwiderstand (RA, bzw. RB) ist durch Läserabgleich einstellbar.

3. Schaltungsanordnung nach Anspruch 1, **gekennzeichnet durch** das Merkmal

3.1 der Schaltstromkreis des das Minus-Potential durchschaltenden elektronischen Schalters (TA) ist mittels einer Strombegrenzungssteuerschaltung (OKS) derart beeinflußbar, daß bei Erdschluß auf der A-Ader der Schleifenstrom (IA) auf annähernd 12 mA begrenzt bleibt.

4. Schaltungsanordnung nach Anspruch 1, **gekennzeichnet durch** die Kombination der Merkmale

4.1 zwischen der Sprechader (A bzw. B) und dem jeweiligen elektronischen Schalter (TA bzw. TB) ist ein Vorwiderstand (RLA bzw. RLB) vorgesehen,

4.2 die Ausgänge der Vorwiderstände (RLA, RLB) stehen mit Wechselstromanschlüssen einer Graetz-Gleichrichterschaltung (GL) in Verbindung, deren gepolte Anschlüsse mit dem Potential in Sperrichtung verbunden sind,

4.3 der erdgepolte Anschluß und die Wechselstromanschlüsse der Graetz-Gleichrichterschaltung (GL) sind über Koppelkondensatoren (CA, CB) miteinander verbunden.

0252872

86 P 4041